# EUROPEAN PATENT APPLICATION

(11) **EP 3 522 463 A1**
(43) Date of publication of application: **07.08.2019**
(21) Application number: 17859876.9
(22) Date of filing: 28.08.2017
(51) Int. Cl.: H04L 12/761

(54) **METHOD AND SOFTWARE-DEFINED NETWORKING (SDN) CONTROLLER FOR PROVIDING MULTICAST SERVICE**

(30) Priority: 12.10.2016 CN 201610890976
(71) Applicant: Huawei Technologies Co., Ltd., Longgang District Shenzhen, Guangdong 518129 (CN)
(72) Inventor: HU, Yongjian, Shenzhen Guangdong 518129 (CN); YANG, Yang, Shenzhen Guangdong 518129 (CN)
(74) Representative: Gill Jennings & Every LLP
(86) International application number: PCT/CN2017/099336
(87) International publication number: WO 2018/068588

(57) **Abstract**

Embodiments of this application provide a multicast service providing method and a software defined networking controller. The method includes: obtaining, by an SDN controller, target path establishment information; determining, by the SDN controller, a target path; obtaining, by the SDN controller, a target multicast IP address corresponding to target service data and a target multicast MAC address corresponding to the target service data; determining, by the SDN controller, a target forwarding rule; and separately sending, by the SDN controller, the target forwarding rule to a plurality of forwarding devices on the target path. Based on the foregoing technical solution, a service server may send, to a terminal device through unicast, target service data requested by the terminal device. The terminal device may further receive, through unicast, the target service data sent by the service server. In this way, neither the service server nor the terminal device needs to support a multicast protocol.

## Description

This application claims priority to Chinese Patent Application No. 201610890976.X, filed with the Chinese Patent Office on October 12, 2016, and entitled "MULTICAST SERVICE PROVIDING METHOD AND SOFTWARE DEFINED NETWORKING CONTROLLER", which is incorporated herein by reference in its entirety.

### TECHNICAL FIELD

This application relates to the field of information technologies, and more specifically, to a multicast service providing method and a software defined networking controller.

### BACKGROUND

To improve data transmission efficiency, and reduce a probability that congestion occurs in a bearer network, when sending data to a terminal device, a server (briefly referred to as an application server below) that provides an application service may send a same data packet to a plurality of terminal devices by using a multicast (English: Multicast) service.

Currently, multicast service providing solutions may be classified into a dynamic multicast solution and a static multicast solution. In the dynamic multicast solution, a device in a bearer network may perceive a multicast service source and a multicast service request, and provide a multicast service based on a demand. In the dynamic multicast solution, a related device in the bearer network needs to support a dynamic multicast protocol, and implement, by using dynamic signaling, processing such as multicast source information releasing, multicast group establishment/deletion, and group member addition/deletion. However, in the dynamic multicast solution, the dynamic multicast protocol needs to be deployed on the related device in the bearer network, and when a network scale of the bearer network is relatively large, a large amount of time needs to be spent in deploying the dynamic multicast protocol on the related device. In addition, when a fault occurs, it is relatively difficult to perform fault isolation and fault locating. In the static multicast solution, a multicast service is implemented through centralized network management. However, in the centralized network management, only a multicast service solution can be pre-deployed, but a current status of a bearer network cannot be perceived in real time. Consequently, resources of the bearer network may be wasted.

In addition, in both the dynamic multicast solution and the static multicast solution, both a terminal device and an application server need to support a multicast technology, for example, need to support the Internet Group Management Protocol (English: Internet Group Management Protocol, IGMP for short). Therefore, a current multicast solution imposes a relatively high requirement on the application server and the terminal device, thereby increasing multicast service deployment complexity. In addition, in the current dynamic multicast solution and static multicast solution, a device in the bearer network further needs to respond to a multicast service request of the terminal device, and consequently there is a risk of protocol packet attack for the device in the bearer network. More devices in the bearer network indicate a larger risk of being attacked.

### SUMMARY

Embodiments of this application provide a multicast service providing method and a software defined networking controller, to provide a dynamic multicast service.

According to a first aspect, an embodiment of this application provides a multicast service providing method. The method includes: obtaining, by a software defined networking SDN controller, target path establishment information, where the target path establishment information includes an Internet Protocol IP address of a service server that provides target service data and an IP address of a terminal device that requests to obtain the target service data; determining, by the SDN controller, a target path based on the IP address of the service server, the IP address of the terminal device, and a topology of forwarding devices in a bearer network, where the target path includes a plurality of forwarding devices in the bearer network; obtaining, by the SDN controller, a target multicast IP address corresponding to the target service data and a target multicast Media Access Control MAC address corresponding to the target service data; determining, by the SDN controller, a target forwarding rule based on the target multicast IP address, the target multicast MAC address, the IP address of the terminal device, a MAC address of the terminal device, and the target path, where the target forwarding rule includes the target multicast IP address and the target multicast MAC address, the target forwarding rule is used to instruct the plurality of forwarding devices on the target path to send, to the terminal device, the target service data carried in a first target packet sent by the service server, a source IP address of the first target packet is the IP address of the service server, and a destination IP address of the first target packet is the IP address of the terminal device; and separately sending, by the SDN controller, the target forwarding rule to the plurality of forwarding devices on the target path. Based on the foregoing technical solution, the service server may send, to the terminal device through unicast, the target service data requested by the terminal device. The terminal device may further receive, through unicast, the target service data sent by the service server. In this way, neither the service server nor the terminal device needs to support a multicast protocol. In addition, in the foregoing technical solution, a device in the bearer network has simple configuration, and can provide a dynamic multicast service. Specifically, in the bearer network, the SDN controller is responsible for controlling an entire forwarding process, and the forwarding device processes a received packet based on a forwarding rule configured by the SDN controller. In this way, only the forwarding device in the bearer network may be configured, and not each device in the bearer network needs to be configured. In addition, because the SDN controller may obtain a running status of each forwarding device in the bearer network, the SDN controller may adjust a multicast service solution based on the running status of the forwarding device in the bearer network, to determine a target path suitable for transmitting the target service data.

With reference to the first aspect, in a first possible implementation of the first aspect, the determining, by the SDN controller, a target path based on the IP address of the service server, the IP address of the terminal device, and a topology of forwarding devices in a bearer network includes: determining, by the SDN controller, an ingress node of the target path in the bearer network based on the IP address of the service server and the topology of the forwarding devices in the bearer network, where the ingress node is a forwarding device through which the first target packet enters the bearer network; and determining, by the SDN controller, an egress node of the target path in the bearer network based on the IP address of the terminal device and the topology of the forwarding devices in the bearer network, where the egress node is a forwarding device through which the first target packet leaves the bearer network. According to the foregoing technical solution, the SDN controller may determine the ingress node and the egress node of the target path in the bearer network, to configure corresponding forwarding rules for the ingress node and the egress node.

With reference to the first possible implementation of the first aspect, in a second possible implementation of the first aspect, the determining, by the SDN controller, a target forwarding rule based on the target multicast IP address, the target multicast MAC address, the IP address of the terminal device, a MAC address of the terminal device, and the target path includes: determining, by the SDN controller, a first forwarding rule in the target forwarding rule based on the target multicast IP address and the target multicast MAC address, where the first forwarding rule includes the target multicast IP address and the target multicast MAC address, the first forwarding rule is used to instruct the ingress node to send the target service data carried in the first target packet to a next-hop node of the ingress node on the target path by using a second target packet, a source IP address of the second target packet is the IP address of the service server, a destination IP address of the second target packet is the target multicast IP address, and a destination MAC address of the second target packet is the target multicast MAC address; and determining, by the SDN controller, a second forwarding rule in the target forwarding rule based on the IP address of the terminal device and the MAC address of the terminal device, where the second forwarding rule includes the IP address of the terminal device and the MAC address of the terminal device, the second forwarding rule is used to instruct the egress node to send, to the terminal device by using a third target packet, the target service data carried in the second target packet received from a previous-hop node of the egress node on the target path, a source IP address of the third target packet is the IP address of the service server, a destination IP address of the third target packet is the IP address of the terminal device, and a destination MAC address of the third target packet is the MAC address of the terminal device. According to the foregoing technical solution, the SDN controller separately configures the corresponding forwarding rules for the ingress node and the egress node of the target path in the bearer network, to send, to the terminal device, data sent by the service server.

With reference to the second possible implementation of the first aspect, in a third possible implementation of the first aspect, the separately sending, by the SDN controller, the target forwarding rule to the plurality of forwarding devices on the target path includes: sending, by the SDN controller, the first forwarding rule in the target forwarding rule to the ingress node on the target path; and sending, by the SDN controller, the second forwarding rule in the target forwarding rule to the egress node on the target path. According to the foregoing technical solution, the SDN controller may separately send the determined forwarding rules to the corresponding forwarding devices, so that the forwarding devices forward the received packets based on the forwarding rules.

With reference to any one of the first possible implementation of the first aspect to the third possible implementation of the first aspect, in a fourth possible implementation of the first aspect, the determining, by the SDN controller, a target path based on the IP address of the service server, the IP address of the terminal device, and a topology of forwarding devices in a bearer network further includes: determining, by the SDN controller, an intermediate node on the target path, where the intermediate node is a forwarding device between the ingress node and the egress node on the target path. According to the foregoing technical solution, the SDN controller may determine the intermediate node on the target path in the bearer network, to configure a corresponding forwarding rule for the intermediate node.

With reference to the fourth possible implementation of the first aspect, in a fifth possible implementation of the first aspect, the determining, by the SDN controller, a target forwarding rule based on the target multicast IP address, the target multicast MAC address, the IP address of the terminal device, a MAC address of the terminal device, and the target path includes: determining, by the SDN controller, a third forwarding rule, where the third forwarding rule is used to instruct the intermediate node to send, to a next-hop node of the intermediate node on the target path, the second target packet received from a previous-hop node of the intermediate node on the target path. According to the foregoing technical solution, the SDN controller configures the corresponding forwarding rule for the intermediate node on the target path in the bearer network, to send, to the terminal device, the data sent by the service server.

With reference to the fifth possible implementation of the first aspect, in a sixth possible implementation of the first aspect, the separately sending, by the SDN controller, the target forwarding rule to the plurality of forwarding devices on the target path includes: sending, by the SDN controller, the third forwarding rule in the target forwarding rule to the intermediate node. According to the foregoing technical solution, the SDN controller may send the determined forwarding rules to the corresponding forwarding devices, so that the forwarding devices forward the received packets based on the forwarding rules.

With reference to the first aspect or any possible implementation of the first aspect, in a seventh possible implementation of the first aspect, before the obtaining, by the SDN controller, a target multicast IP address corresponding to the target service data, the method further includes: receiving, by the SDN controller, identities of N pieces of service data sent by the service server; and determining, by the SDN controller, N multicast IP addresses, where the N multicast IP addresses correspond one-to-one to the identities of the N pieces of service data. According to the foregoing technical solution, the SDN controller may determine a correspondence between service data and a multicast IP address, to ensure that one corresponding multicast IP address is allocated to each piece of service data.

According to a second aspect, an embodiment of this application provides a software defined networking controller. The software defined networking controller includes a unit performing the first aspect or any possible implementation of the first aspect.

According to a third aspect, an embodiment of this application provides a software defined networking controller. The software defined networking controller includes a processor, a memory, and a transceiver. The memory is configured to store an instruction implementing the method in the first aspect or any possible implementation of the first aspect. The processor performs the instruction stored in the memory, to implement, together with the transceiver, the method in the first aspect or any possible implementation of the first aspect.

### BRIEF DESCRIPTION OF DRAWINGS

FIG. 1 is a diagram of a system architecture including an SDN controller, forwarding devices, a service server, and a terminal device;
FIG. 2 is a schematic flowchart of a multicast service providing method according to an embodiment of this application;
FIG. 3 is a structural block diagram of an SDN controller according to an embodiment of this application; and
FIG. 4 is a structural block diagram of an SDN controller according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

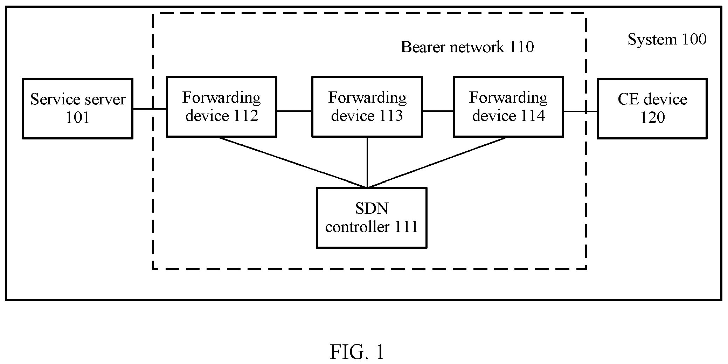

FIG. 1 is a diagram of a system architecture including a software defined networking (English: Software Defined Networking, SDN for short) controller (English: Controller), forwarding devices, a service server, and a terminal device. A system 100 shown in FIG. 1 includes a service server 101, forwarding devices in a bearer network 110, an SDN controller 111 configured to manage the forwarding devices in the bearer network, and a CE device 120. The bearer network 110 shown in FIG. 1 includes a forwarding device 112, a forwarding device 113, and a forwarding device 114. The SDN controller configured to manage the forwarding devices in the bearer network is managed by an operator. The SDN controller configured to manage the forwarding devices in the bearer network may be considered as a network device in the bearer network, or may not be considered as a network device in the bearer network. This is not limited in this embodiment of this application.

The forwarding device in the bearer network may be a provider edge (English: Provider Edge, PE for short) device or a provider (English: Provider, P for short) device. For example, in the bearer network 110 shown in FIG. 1, the forwarding device 112 and the forwarding device 114 are PE devices, and the forwarding device 113 is a P device. For another example, if the bearer network includes only two forwarding devices, the two forwarding devices are both PE devices. If a particular path in the bearer network includes only two forwarding devices, the two forwarding devices are both PE devices.

The terminal device may be a customer edge (English: Customer Edge, CE for short) device shown in FIG. 1. The terminal device may alternatively be another device such as a mobile terminal (including a mobile phone, a tablet computer, or the like), or a computer.

This application is further described below with reference to the system 100 shown in FIG. 1.

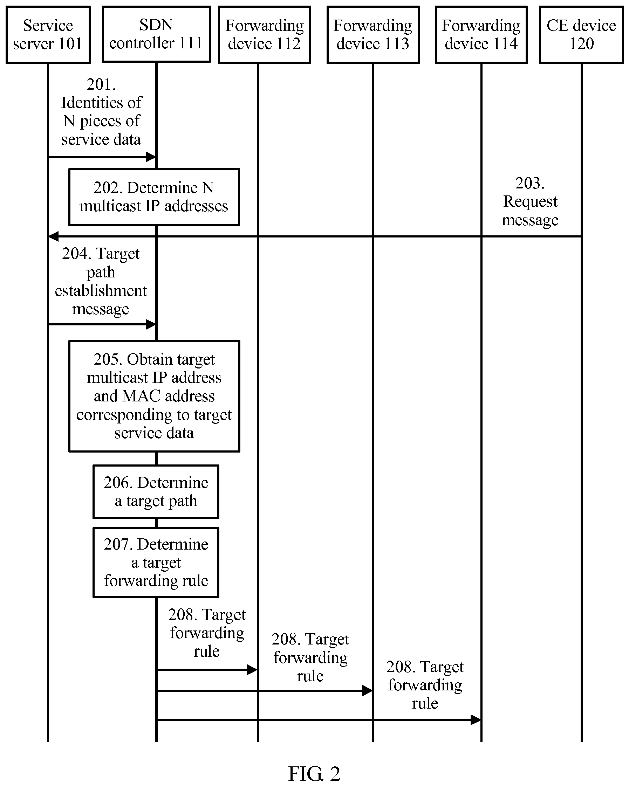

FIG. 2 is a schematic flowchart of a multicast service providing method according to an embodiment of this application.

201. A service server 101 sends identities (English: Identity, ID for short) of N pieces of service data to an SDN controller 111.

The service server 101 is a server that provides service data. For example, the service server 101 may be a server that provides an online video on-demand service, or may be a server that provides an online music on-demand service, or may be a server that provides application downloading.

The service server 101 may allocate one ID to each piece of service data. For example, it is assumed that the service server 101 is a server that provides an online video on-demand service. The service server 101 may allocate one ID to each video resource (which may alternatively be referred to as a video file). In this way, the service server 101 may find corresponding service data based on an ID of the service data.

202. The SDN controller 111 determines N multicast IP addresses, where the N multicast IP addresses correspond one-to-one to the IDs of the N pieces of service data.

203. A CE device 120 sends a request message to the service server 101, where the request message carries an ID of target service data.

Specifically, the target service data is service data that the CE device 120 desires to obtain from the service server 101. For ease of description, it is assumed that the N pieces of service data stored in the service server 101 include the target service data. The request message sent by the CE device 120 is sent to the service server 101 by using a bearer network 110. A forwarding device in the bearer network 110 transparently transmits the request message to the service server 101. In other words, a network device (including the forwarding device) in the bearer network 110 does not process the request message.

204. The SDN controller 111 obtains target path establishment information, where the target path establishment information includes an Internet Protocol (English: Internet Protocol, IP for short) IP address of the service server 101 and an IP address of the CE device 120.

Optionally, in some embodiments, the service server 101 may send the target path establishment message to the SDN controller 111. The obtaining, by the SDN controller 111, a target path establishment message includes: receiving, by the SDN controller 111, the target path establishment message sent by the service server 101.

205. The SDN controller 111 obtains a target multicast IP address corresponding to the target service data and a target multicast Media Access Control (English: Media Access Control, MAC for short) address corresponding to the target service data.

Optionally, in some embodiments, the service server 101 may send the ID of the target service data to the SDN controller. The SDN controller 111 may determine, based on the ID of the target service data and a correspondence between service data and a multicast IP address, the target multicast IP address corresponding to the target service data. The SDN controller 111 may determine, based on the target multicast IP address and a correspondence between a multicast IP address and a multicast MAC address, the target multicast MAC address corresponding to the target service data. The ID of the target service data may be carried in the target path establishment message.

206. The SDN controller 111 determines a target path based on the IP address of the service server 101, the IP address of the CE device 120, and a topology of forwarding devices in a bearer network 110, where the target path includes a plurality of forwarding devices in the bearer network 110.

The SDN controller 111 may determine an ingress node of the target path in the bearer network 110 based on the IP address of the service server 101 and the topology of the forwarding devices in the bearer network 110. The ingress node is a forwarding device through which a first target packet enters the bearer network 110, and the first target packet is a packet that is sent by the service server 101 and that carries the target service data. The SDN controller 111 may further determine an egress node of the target path in the bearer network 110 based on the IP address of the CE device 120 and the topology of the forwarding devices in the bearer network 110. The egress node is a forwarding device through which the first target packet leaves the bearer network 110.

Optionally, in some embodiments, in addition to the egress node and the ingress node, the target path may further include at least one intermediate node. In this case, the SDN controller 111 may further determine the intermediate node on the target path. The intermediate node is a forwarding device between the ingress node and the egress node on the target path.

The system 100 shown in FIG. 1 is used as an example. The SDN controller 111 may determine that the ingress node of the target path in the bearer network 110 is a forwarding device 112, the intermediate node on the target path is a forwarding device 113, and the egress node of the target path in the bearer network 110 is a forwarding device 114.

Specifically, the SDN controller 111 may obtain the topology of the forwarding devices in the bearer network, and a connection relationship between another device and the forwarding devices. In this way, after obtaining the IP address of the service server 101, the SDN controller 111 may determine, based on a connection relationship between the service server 101 and the forwarding devices, a forwarding device (to be specific, the ingress node in the bearer network 110) that can receive a packet sent by the service server 101. Similarly, after obtaining the IP address of the CE device 120, the SDN controller 111 may determine, based on a connection relationship between the CE device 120 and the forwarding devices, a forwarding device (to be specific, the egress node in the bearer network 110) that can send a packet to the CE device 120. The SDN controller may further determine, based on a connection relationship between the ingress node and the egress node, the forwarding device between the ingress node and the egress node.

In some embodiments, the SDN controller 111 may first determine the target path, and then, separately determine the ingress node, the egress node, and the intermediate node on the target path.

In some other embodiments, the SDN controller 111 may first determine the ingress node and the egress node of the target path, and then, determine the intermediate node on the target path based on the connection relationship between the ingress node and the egress node, to finally determine the target path.

Further, the SDN controller 111 may determine a plurality of paths, and then, select one path from the plurality of paths as the target path. For example, the SDN controller may select a path with lowest traffic from the plurality of paths as the target path. For another example, the SDN controller may alternatively select a path with a shortest delay from the plurality of paths as the target path.

In addition, the SDN controller 111 may consider a load status of each forwarding device when determining each node on the target path. The system 100 shown in FIG. 1 is used as an example. The bearer network 110 further includes a forwarding device 115 (not shown in the figure), and the forwarding device 115 is separately connected to the forwarding device 112 and the forwarding device 114. Therefore, in addition to the forwarding device 113, the forwarding device 115 may also be used as the intermediate node. In this case, the SDN controller 111 may select one forwarding device from the forwarding device 113 and the forwarding device 115 as the intermediate node based on a load status of the forwarding device 113 and a load status of the forwarding device 115.

207. The SDN controller 111 may determine a target forwarding rule based on the target multicast IP address, the IP address of the CE device, the target multicast MAC address, and the target path, where the target forwarding rule includes the target multicast IP address and the target multicast MAC address, the target forwarding rule is used to instruct the plurality of forwarding devices on the target path to send, to the CE device 120, the target service data carried in a first target packet sent by the service server 101, a source IP address of the first target packet is the IP address of the service server 101, a destination IP address of the first target packet is the IP address of the CE device 120, a source MAC address of the first target packet is the IP address of the service server 101, and a destination MAC address of the first target packet is a MAC address of the CE device 120.

Optionally, in some embodiments, the SDN controller 111 may determine a first forwarding rule in the target forwarding rule based on the target multicast IP address and the target multicast MAC address, where the first forwarding rule includes the target multicast IP address and the target multicast MAC address, the first forwarding rule is used to instruct the ingress node to send the target service data carried in the first target packet to a next-hop node of the ingress node on the target path by using a second target packet, a source IP address of the second target packet is the IP address of the service server 101, a destination IP address of the second target packet is the target multicast IP address, and a destination MAC address of the second target packet is the target multicast MAC address.

The SDN controller 111 determines a second forwarding rule in the target forwarding rule based on the IP address of the CE device 120 and the MAC address of the CE device 120. The second forwarding rule includes the IP address of the CE device 120 and the MAC address of the CE device 120, the second forwarding rule is used to instruct the egress node to send, to the CE device 120 by using a third target packet, the target service data carried in the second target packet received from a previous-hop node of the egress node on the target path, a source IP address of the third target packet is the IP address of the service server 101, a destination IP address of the third target packet is the IP address of the CE device 120, a destination MAC address of the third target packet is the MAC address of the CE device 120, and a source MAC address of the third target packet is a MAC address of the previous-hop node.

The SDN controller 111 may further determine a third forwarding rule. The third forwarding rule is used to instruct the intermediate node to send, to a next-hop node of the intermediate node on the target path, the second target packet received from a previous-hop node of the intermediate node on the target path.

It may be understood that if the determined target path includes only two forwarding devices, the two forwarding devices are respectively the ingress node and the egress node. In this case, the SDN controller 111 does not need to determine the third forwarding rule.

208. The SDN controller 111 separately sends the target forwarding rule to the plurality of forwarding devices on the target path.

The SDN controller 111 sends the first forwarding rule in the target forwarding rule to the ingress node on the target path. The SDN controller 111 sends the second forwarding rule in the target forwarding rule to the egress node on the target path. The SDN controller 111 sends the third forwarding rule in the target forwarding rule to the intermediate node.

It may be understood that if the determined target path includes only two forwarding devices, the two forwarding devices are respectively the ingress node and the egress node. In this case, the SDN controller 111 does not need to determine the third forwarding rule, and therefore, does not need to send the third forwarding rule to the intermediate node.

The forwarding devices in the bearer network may send, to the CE device 120 based on the target forwarding rule, the target service data sent by the service server 101.

The system shown in FIG. 1 is still used as an example. The SDN controller 111 may send the determined first forwarding rule to the forwarding device 112 (to be specific, the ingress node). After receiving the first target packet sent by the service server 101, the forwarding device 112 may determine the second target packet based on the first forwarding rule. The second target packet is a packet that is sent by the ingress node to the next-hop node and that carries the target service data. The second target packet is also a packet that is received by the egress node from the previous-hop node and that carries the target service data. In addition, the second target packet is also a packet received and sent by the forwarding device used as the intermediate node. Both the second target packet and the first target packet include the target service data carried in the first target packet. The source IP address of the second target packet is the IP address of the service server 101. The source MAC address of the second target packet is the MAC address of the service server 101. The destination IP address of the second target packet is the target multicast IP address. The destination MAC address of the second target packet is the target multicast MAC address. The forwarding device 112 sends the determined second target packet to the forwarding device 113.

The SDN controller 111 may send the determined third forwarding rule to the intermediate node on the target path, for example, the forwarding device 113. After receiving the second target packet sent by the forwarding device 112, the forwarding device 113 may send the second target packet to the forwarding device 114. The destination IP address and the destination MAC address of the second target packet sent by the forwarding device 113 are the same as the destination IP address and the destination MAC address of the second target packet received by the forwarding device 113, to be specific, are the target multicast IP address and the target multicast MAC address. The source IP address of the second target packet sent by the forwarding device 113 is the same as the source IP address of the second target packet received by the forwarding device 113, to be specific, is the IP address of the service server 101. A source MAC address of the second target packet sent by the forwarding device 113 is a MAC address of the forwarding device 113.

The system shown in FIG. 1 is still used as an example. The SDN controller 111 may send the determined second forwarding rule to the forwarding device 114 (to be specific, the egress node). The forwarding device 114 may determine the third target packet based on the second forwarding rule. Both the third target packet and the first target packet include the target service data carried in the first target packet. The source IP address of the third target packet is the IP address of the service server 101. The source MAC address of the third target packet is the MAC address of the service server 101. The destination IP address of the third target packet is the IP address of the CE device 120. The destination MAC address of the second target packet is the MAC address of the CE device 120. The forwarding device 112 sends the determined second target packet to the forwarding device 113. The forwarding device 114 sends the third target packet to the CE device 120.

In addition, it is assumed that the target path further includes a forwarding device 116 (not shown in the figure) between the forwarding device 113 and the forwarding device 114. In this case, after receiving the second target packet sent by the forwarding device 112, the forwarding device 113 may send the second target packet to the forwarding device 116. After receiving the second target packet sent by the forwarding device 113, the forwarding device 116 may send the second target packet to the forwarding device 114. The destination IP address and the destination MAC address of the second target packet sent by the forwarding device 113 and the forwarding device 116 are the same as the destination IP address of the second target packet received by the forwarding device 113, to be specific, are the target multicast IP address. The destination MAC address of the second target packet sent by the forwarding device 113 and the forwarding device 116 is the same as the destination MAC address of the second target packet received by the forwarding device 113, to be specific, is the target multicast MAC address. The source IP address of the second target packet sent by the forwarding device 113 and the forwarding device 116 is the same as the source IP address of the second target packet received by the forwarding device 113, to be specific, is the IP address of the service server 101. The source MAC address of the second target packet sent by the forwarding device 113 is the MAC address of the forwarding device 113. The source MAC address of the second target packet sent by the forwarding device 116 is a MAC address of the forwarding device 116.

In the method shown in FIG. 2, the service server may send, to the terminal device through unicast, the target service data requested by the terminal device. The terminal device may further receive, through unicast, the target service data sent by the service server. In this way, neither the service server nor the terminal device needs to support a multicast protocol. In addition, in the method shown in FIG. 2, the device in the bearer network has simple configuration, and can provide a dynamic multicast service. Specifically, in the bearer network, the SDN controller is responsible for controlling an entire forwarding process, and the forwarding device processes a received packet based on a forwarding rule configured by the SDN controller. In this way, only the forwarding device in the bearer network may be configured, and not each device in the bearer network needs to be configured. In addition, because the SDN controller may obtain a running status of each forwarding device in the bearer network, the SDN controller may adjust a multicast service solution based on the running status of the forwarding device in the bearer network, to determine a target path suitable for transmitting the target service data.

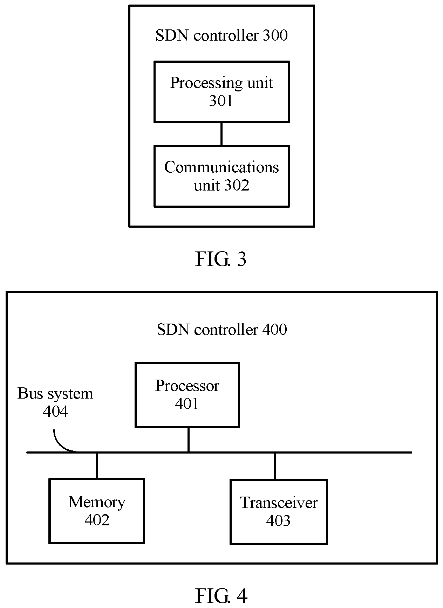

FIG. 3 is a structural block diagram of an SDN controller according to an embodiment of this application. As shown in FIG. 3, an SDN controller 300 includes a processing unit 301 and a communications unit 302.

The processing unit 301 is configured to obtain target path establishment information, where the target path establishment information includes an IP address of a service server that provides target service data and an IP address of a terminal device that requests to obtain the target service data.

The processing unit 301 is further configured to determine a target path based on the IP address of the service server, the IP address of the terminal device, and a topology of forwarding devices in a bearer network, where the target path includes a plurality of forwarding devices in the bearer network.

The processing unit 301 is further configured to obtain a target multicast IP address corresponding to the target service data and a target multicast MAC address corresponding to the target service data.

The processing unit 301 is further configured to determine a target forwarding rule based on the target multicast IP address, the target multicast MAC address, the IP address of the terminal device, a MAC address of the terminal device, and the target path, where the target forwarding rule includes the target multicast IP address and the target multicast MAC address, the target forwarding rule is used to instruct the plurality of forwarding devices on the target path to send, to the terminal device, the target service data carried in a first target packet sent by the service server, a source IP address of the first target packet is the IP address of the service server, and a destination IP address of the first target packet is the IP address of the terminal device.

The communications unit 302 is configured to separately send the target forwarding rule to the plurality of forwarding devices on the target path.

Optionally, in some embodiments, the communications unit 302 may receive a target path establishment message sent by the service server. The processing unit 301 may obtain the target path establishment message received by the communications unit 302.

Optionally, in some embodiments, the processing unit 301 is specifically configured to: determine an ingress node of the target path in the bearer network based on the IP address of the service server and the topology of the forwarding devices in the bearer network, where the ingress node is a forwarding device through which the first target packet enters the bearer network; and determine an egress node of the target path in the bearer network based on the IP address of the terminal device and the topology of the forwarding devices in the bearer network, where the egress node is a forwarding device through which the first target packet leaves the bearer network.

Optionally, in some embodiments, the processing unit 301 is specifically configured to: determine a first forwarding rule in the target forwarding rule based on the target multicast IP address and the target multicast MAC address, where the first forwarding rule includes the target multicast IP address and the target multicast MAC address, the first forwarding rule is used to instruct the ingress node to send the target service data carried in the first target packet to a next-hop node of the ingress node on the target path by using a second target packet, a source IP address of the second target packet is the IP address of the service server, a destination IP address of the second target packet is the target multicast IP address, and a destination MAC address of the second target packet is the target multicast MAC address; and determine a second forwarding rule in the target forwarding rule based on the IP address of the terminal device and the MAC address of the terminal device, where the second forwarding rule includes the IP address of the terminal device and the MAC address of the terminal device, the second forwarding rule is used to instruct the egress node to send, to the terminal device by using a third target packet, the target service data carried in the second target packet received from a previous-hop node of the egress node on the target path, a source IP address of the third target packet is the IP address of the service server, a destination IP address of the third target packet is the IP address of the terminal device, and a destination MAC address of the third target packet is the MAC address of the terminal device.

Optionally, in some embodiments, the communications unit 302 is specifically configured to: send the first forwarding rule in the target forwarding rule to the ingress node on the target path, and send the second forwarding rule in the target forwarding rule to the egress node on the target path.

Optionally, in some embodiments, the processing unit 301 is specifically configured to determine an intermediate node on the target path, where the intermediate node is a forwarding device between the ingress node and the egress node on the target path.

Optionally, in some embodiments, the processing unit 301 is specifically configured to determine a third forwarding rule, where the third forwarding rule is used to instruct the intermediate node to send, to a next-hop node of the intermediate node on the target path, the second target packet received from a previous-hop node of the intermediate node on the target path.

Optionally, in some embodiments, the communications unit 302 is specifically configured to send the third forwarding rule in the target forwarding rule to the intermediate node.

Optionally, in some embodiments, the communications unit 302 is further configured to receive identities of N pieces of service data sent by the service server, and the processing unit 301 is further configured to determine N multicast IP addresses, where the N multicast IP addresses correspond one-to-one to the identities of the N pieces of service data.

For operations and functions of the processing unit 301 and the communications unit 302 of the SDN controller 300, refer to the method in FIG. 2. To avoid repetition, details are not described herein again.

FIG. 4 is a structural block diagram of an SDN controller according to an embodiment of this application. An SDN controller 400 shown in FIG. 4 includes a processor 401, a memory 402, and a transceiver 403.

Components of the SDN controller 400 are coupled together by using a bus system 404. In addition to a data bus, the bus system 404 further includes a power bus, a control bus, and a status signal bus. However, for clear description, various types of buses in FIG. 4 are marked as the bus system 604.

The method disclosed in the embodiments of this application may be applied to the processor 401, or implemented by the processor 401. The processor 401 may be an integrated circuit chip, and has a signal processing capability. In an implementation process, steps in the foregoing method can be implemented by using a hardware integrated logical circuit in the processor 401, or by using instructions in a form of software. The processor 401 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or a transistor logic device, or a discrete hardware component. The processor 401 may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory (Random Access Memory, RAM), a flash memory, a read-only memory (Read-Only Memory, ROM), a programmable read-only memory, an electrically erasable programmable memory, a register, or the like. The storage medium is located in the memory 402, and the processor 401 reads an instruction in the memory 402 and completes the steps in the foregoing methods in combination with hardware of the processor.

Optionally, in some embodiments, the memory 402 may be configured to store an instruction configured to perform the method performed by the SDN controller in the method shown in FIG. 2. The processor 401 may execute the instruction stored in the memory 402, to implement, together with other hardware (for example, the transceiver 403), the steps performed by the SDN controller in the method shown in FIG. 2. For a specific working process and beneficial effects, refer to the descriptions of the SDN controller in the embodiment shown in FIG. 2.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multicast service providing method, wherein the method comprises:
obtaining, by a software defined networking SDN controller, target path establishment information, wherein the target path establishment information comprises an Internet Protocol IP address of a service server that provides target service data and an IP address of a terminal device that requests to obtain the target service data;
determining, by the SDN controller, a target path based on the IP address of the service server, the IP address of the terminal device, and a topology of forwarding devices in a bearer network, wherein the target path comprises a plurality of forwarding devices in the bearer network;
obtaining, by the SDN controller, a target multicast IP address corresponding to the target service data and a target multicast Media Access Control MAC address corresponding to the target service data;
determining, by the SDN controller, a target forwarding rule based on the target multicast IP address, the target multicast MAC address, the IP address of the terminal device, a MAC address of the terminal device, and the target path, wherein the target forwarding rule comprises the target multicast IP address and the target multicast MAC address, the target forwarding rule is used to instruct the plurality of forwarding devices on the target path to send, to the terminal device, the target service data carried in a first target packet sent by the service server, a source IP address of the first target packet is the IP address of the service server, and a destination IP address of the first target packet is the IP address of the terminal device; and
separately sending, by the SDN controller, the target forwarding rule to the plurality of forwarding devices on the target path.

2. The method according to claim 1, wherein the determining, by the SDN controller, a target path based on the IP address of the service server, the IP address of the terminal device, and a topology of forwarding devices in a bearer network comprises:
determining, by the SDN controller, an ingress node of the target path in the bearer network based on the IP address of the service server and the topology of the forwarding devices in the bearer network, wherein the ingress node is a forwarding device through which the first target packet enters the bearer network; and
determining, by the SDN controller, an egress node of the target path in the bearer network based on the IP address of the terminal device and the topology of the forwarding devices in the bearer network, wherein the egress node is a forwarding device through which the first target packet leaves the bearer network.

3. The method according to claim 2, wherein the determining, by the SDN controller, a target forwarding rule based on the target multicast IP address, the target multicast MAC address, the IP address of the terminal device, a MAC address of the terminal device, and the target path comprises:
determining, by the SDN controller, a first forwarding rule in the target forwarding rule based on the target multicast IP address and the target multicast MAC address, wherein the first forwarding rule comprises the target multicast IP address and the target multicast MAC address, the first forwarding rule is used to instruct the ingress node to send the target service data carried in the first target packet to a next-hop node of the ingress node on the target path by using a second target packet, a source IP address of the second target packet is the IP address of the service server, a destination IP address of the second target packet is the target multicast IP address, and a destination MAC address of the second target packet is the target multicast MAC address; and
determining, by the SDN controller, a second forwarding rule in the target forwarding rule based on the IP address of the terminal device and the MAC address of the terminal device, wherein the second forwarding rule comprises the IP address of the terminal device and the MAC address of the terminal device, the second forwarding rule is used to instruct the egress node to send, to the terminal device by using a third target packet, the target service data carried in the second target packet received from a previous-hop node of the egress node on the target path, a source IP address of the third target packet is the IP address of the service server, a destination IP address of the third target packet is the IP address of the terminal device, and a destination MAC address of the third target packet is the MAC address of the terminal device.

4. The method according to claim 3, wherein the separately sending, by the SDN controller, the target forwarding rule to the plurality of forwarding devices on the target path comprises:
sending, by the SDN controller, the first forwarding rule in the target forwarding rule to the ingress node on the target path; and
sending, by the SDN controller, the second forwarding rule in the target forwarding rule to the egress node on the target path.

5. The method according to any one of claims 2 to 4, wherein the determining, by the SDN controller, a target path based on the IP address of the service server, the IP address of the terminal device, and a topology of forwarding devices in a bearer network further comprises: determining, by the SDN controller, an intermediate node on the target path, wherein the intermediate node is a forwarding device between the ingress node and the egress node on the target path.

6. The method according to claim 5, wherein the determining, by the SDN controller, a target forwarding rule based on the target multicast IP address, the target multicast MAC address, the IP address of the terminal device, a MAC address of the terminal device, and the target path comprises:
determining, by the SDN controller, a third forwarding rule, wherein the third forwarding rule is used to instruct the intermediate node to send, to a next-hop node of the intermediate node on the target path, the second target packet received from a previous-hop node of the intermediate node on the target path.

7. The method according to claim 6, wherein the separately sending, by the SDN controller, the target forwarding rule to the plurality of forwarding devices on the target path comprises:
sending, by the SDN controller, the third forwarding rule in the target forwarding rule to the intermediate node.

8. The method according to any one of claims 1 to 7, wherein before the obtaining, by the SDN controller, a target multicast IP address corresponding to the target service data, the method further comprises:
receiving, by the SDN controller, identities of N pieces of service data sent by the service server; and
determining, by the SDN controller, N multicast IP addresses, wherein the N multicast IP addresses correspond one-to-one to the identities of the N pieces of service data.

9. A software defined networking SDN controller, wherein the SDN controller comprises:
a processing unit, configured to obtain target path establishment information, wherein the target path establishment information comprises an Internet Protocol IP address of a service server that provides target service data and an IP address of a terminal device that requests to obtain the target service data, wherein
the processing unit is further configured to determine a target path based on the IP address of the service server, the IP address of the terminal device, and a topology of forwarding devices in a bearer network, wherein the target path comprises a plurality of forwarding devices in the bearer network;
the processing unit is further configured to obtain a target multicast IP address corresponding to the target service data and a target multicast Media Access Control MAC address corresponding to the target service data; and
the processing unit is further configured to determine a target forwarding rule based on the target multicast IP address, the target multicast MAC address, the IP address of the terminal device, a MAC address of the terminal device, and the target path, wherein the target forwarding rule comprises the target multicast IP address and the target multicast MAC address, the target forwarding rule is used to instruct the plurality of forwarding devices on the target path to send, to the terminal device, the target service data carried in a first target packet sent by the service server, a source IP address of the first target packet is the IP address of the service server, and a destination IP address of the first target packet is the IP address of the terminal device; and
a communications unit, configured to separately send the target forwarding rule to the plurality of forwarding devices on the target path.

10. The SDN controller according to claim 9, wherein the processing unit is specifically configured to: determine an ingress node of the target path in the bearer network based on the IP address of the service server and the topology of the forwarding devices in the bearer network, wherein the ingress node is a forwarding device through which the first target packet enters the bearer network; and
determine an egress node of the target path in the bearer network based on the IP address of the terminal device and the topology of the forwarding devices in the bearer network, wherein the egress node is a forwarding device through which the first target packet leaves the bearer network.

11. The SDN controller according to claim 10, wherein the processing unit is specifically configured to: determine a first forwarding rule in the target forwarding rule based on the target multicast IP address and the target multicast MAC address, wherein the first forwarding rule comprises the target multicast IP address and the target multicast MAC address, the first forwarding rule is used to instruct the ingress node to send the target service data carried in the first target packet to a next-hop node of the ingress node on the target path by using a second target packet, a source IP address of the second target packet is the IP address of the service server, a destination IP address of the second target packet is the target multicast IP address, and a destination MAC address of the second target packet is the target multicast MAC address; and
determine a second forwarding rule in the target forwarding rule based on the IP address of the terminal device and the MAC address of the terminal device, wherein the second forwarding rule comprises the IP address of the terminal device and the MAC address of the terminal device, the second forwarding rule is used to instruct the egress node to send, to the terminal device by using a third target packet, the target service data carried in the second target packet received from a previous-hop node of the egress node on the target path, a source IP address of the third target packet is the IP address of the service server, a destination IP address of the third target packet is the IP address of the terminal device, and a destination MAC address of the third target packet is the MAC address of the terminal device.

12. The SDN controller according to claim 11, wherein the communications unit is specifically configured to: send the first forwarding rule in the target forwarding rule to the ingress node on the target path, and send the second forwarding rule in the target forwarding rule to the egress node on the target path.

13. The SDN controller according to any one of claims 10 to 12, wherein the processing unit is specifically configured to determine an intermediate node on the target path, wherein the intermediate node is a forwarding device between the ingress node and the egress node on the target path.

14. The SDN controller according to claim 13, wherein the processing unit is specifically configured to determine a third forwarding rule, wherein the third forwarding rule is used to instruct the intermediate node to send, to a next-hop node of the intermediate node on the target path, the second target packet received from a previous-hop node of the intermediate node on the target path.

15. The SDN controller according to claim 14, wherein the communications unit is specifically configured to send the third forwarding rule in the target forwarding rule to the intermediate node.

16. The SDN controller according to any one of claims 9 to 15, wherein the communications unit is further configured to receive identities of N pieces of service data sent by the service server; and
the processing unit is further configured to determine N multicast IP addresses, wherein the N multicast IP addresses correspond one-to-one to the identities of the N pieces of service data.
